# EUROPEAN PATENT APPLICATION

(11) **EP 1 533 812 A2**
(43) Date of publication of application: **25.05.2005**
(21) Application number: 04257088.7
(22) Date of filing: 16.11.2004
(51) Int. Cl.: G11B 27/034, G11B 27/10, G11B 27/32

(54) **Information processing apparatus, information editing apparatus, information processing system, playback apparatus, playback system, method therefor, program therefor, and recording medium storing the program**

(30) Priority: 18.11.2003 JP 2003388488
(71) Applicant: Pioneer Corporation, Tokyo 153-8654 (JP)
(72) Inventor: Umehara, Y., c/o Pioneer Corp. Tokorozawa Plant, Tokorozawa-shi, Saitama 359-8522 (JP)
(74) Representative: Haley, Stephen

(57) **Abstract**

Content information in a recording medium or HD mounted on an information processing apparatus (400) is recorded in an external medium mounted on the apparatus (400). The external medium is mounted on a portable information editing apparatus (300), and the content information is reproduced by a terminal display apparatus and/or a terminal speaker apparatus. Based on the reproduction, data area of the content information to be reproduced by the apparatus (400) is set and edited using a terminal input section, and edited script information is generated and recorded in the external medium. The external medium is mounted on the apparatus (400) again, and the edited script information is received by the instruction information receiving section and recorded in the recording medium or the HD. The content information can be reproduced as a content edited by the portable information editing apparatus (300), thus the editing is executed easily and effectively.

## Description

The present invention relates to an information processing apparatus, an information editing apparatus, an information processing system, a playback apparatus and a playback system for editing and processing information stored in a recording medium, a method therefor, a program therefor, and a recording medium storing the program.

Recently, as playback apparatus for recording and reproducing information such as TV broadcasts, those with a plurality of recording means become well known (for example, refer to http://www3.pioneer.co.jp/catalog/pdf/hec_dvd_synthesis0307.pdf: September 30, 2003). Such playback apparatus has a high-capacity hard disk (HD: Hard Disk) as a recording means and a drive for recording information readably in a recording medium such as DVD-R (Digital Versatile Disc-Recordable), DVD-RW (Digital Versatile Disc-Rewritable) and DVD-RAM (Digital Versatile Disc-Random Access Memory). Also, such playback apparatus is so configured, for example, to record information in a HD once and then appropriately record in a recording medium such as DVD, or to record information directly in a recording medium.

According to the configuration of a conventional playback apparatus, for example, video is edited while viewing pictures displayed on the screen. Therefore, the video can be edited only at a location where a monitor connected with the playback apparatus is installed. Accordingly, what is desired is a configuration that allows effective video editing with ease.

An object of the present invention is to provide an information processing apparatus, an information editing apparatus, an information processing system; a playback apparatus and a playback system with which effective information editing can be easily carried out, a method therefor, a program therefor, and a recording medium storing the program.

According to the present invention, an information processing apparatus includes: an information receiving section for receiving information output from an output section; an information sending section for sending the acquired information; an instruction information receiving section for receiving instruction information, which is generated by a terminal apparatus based on the sent information and is related to an output condition for the output section to output the information, from the terminal apparatus; and a recording section for recording the received instruction information in a recording medium so that the information can be output by the output section based on a content of the instruction information.

According to the present invention, an information editing apparatus for editing and processing information, which is recorded in a recording medium capable of recording various types of information and is output by an output section, includes: a terminal information receiving section for receiving the information from a processing apparatus for reading and processing the information so that the information can be output by the output section; a terminal output section for outputting the received information; an instruction information generating section for generating instruction information related to an output condition for the output section to output the information; and a terminal information sending section for sending the generated instruction information to the processing apparatus.

According to the present invention, an information processing system includes: the above-described information processing apparatus; and the above-described information editing apparatus.

According to the present invention, a playback apparatus includes: the above-described information processing apparatus; and an output section for outputting the information received by the information processing apparatus.

According to the present invention, a playback system includes: the above-described information processing system; and the above-described output section for outputting the information processed by the information processing system based on the instruction information.

According to the present invention, an information processing method for editing and processing information, which is recorded in a recording medium capable of recording various types of information and is output by an output section, includes the steps of: receiving the information so that the information is read by a terminal apparatus including a terminal output section capable of outputting the information; receiving instruction information, which is generated for the information read by the terminal apparatus based on input operation and is related to a condition for the output section to output the information, from the terminal apparatus; and recording the instruction information in the recording medium in a manner such that the output section outputs the information based on a content of the received instruction information.

According to the present invention, an information editing method for editing and processing information, which is recorded in a recording medium capable of recording various types of information and is output by an output section, includes the steps of: receiving the information from a processing apparatus for reading and processing the information so that the information can be output by the output section; generating instruction information, which is related to information to be output by the output section based on input operation for the received information; and receiving the instruction information by the processing apparatus in a condition where the output section outputs the information based on a content of the generated instruction information and outputting the instruction information so as to be recordable in the recording medium.

According to the present invention, an information processing program for having a computing section to execute the above-described information processing method.

According to the present invention, an information processing program for having a computing section to execute the above-described information editing method.

According to the present invention, a recording medium storing the above-described information processing program in a manner readable by a computing section.
Fig. 1 is a block diagram schematically showing the configuration of a recording/playback system according to one embodiment of the present invention;
Fig. 2 is a block diagram schematically showing the configuration of an information processing apparatus in the embodiment;
Fig. 3 is a block diagram schematically showing the configuration of an information editing apparatus in the embodiment;
Fig. 4 is a block diagram showing a detailed configuration of the information processing apparatus in the embodiment;
Fig. 5A and Fig. 5B are schematic diagrams each conceptually showing content information in time-line in the embodiment: Fig. 5A is a diagram schematically showing content information recorded in a recording medium before editing, and Fig. 5B is a diagram schematically showing the content information after the editing;
Fig. 6A and Fig. 6B are schematic diagrams each conceptually showing script information in the embodiment: Fig. 6A is a diagram conceptually showing script information recorded in the recording medium, and Fig. 6B is a diagram conceptually showing the script information after editing; and
Fig. 7 is a diagram conceptually showing script information generated by the information editing apparatus of the embodiment.

### [Configuration of Recording/playback System]

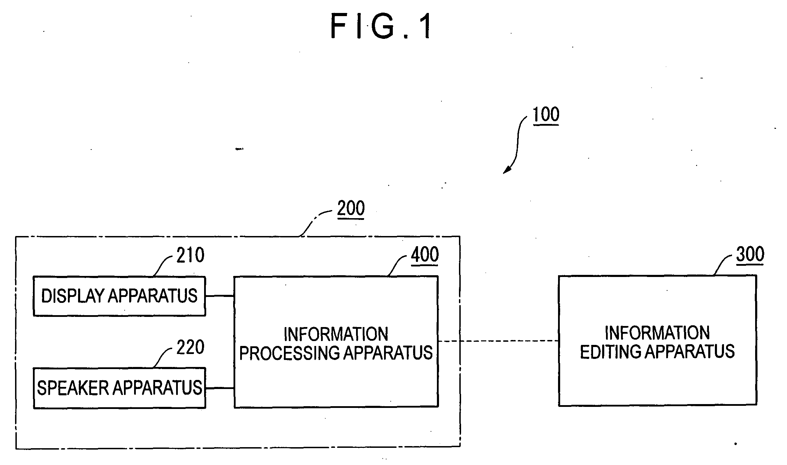

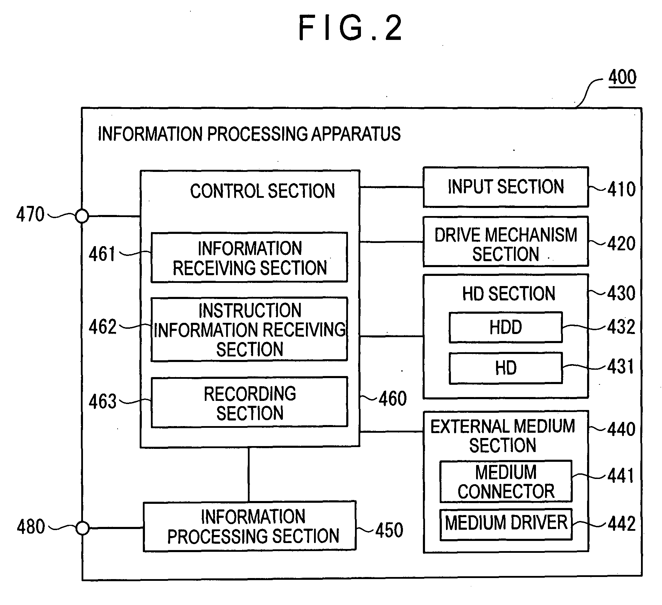

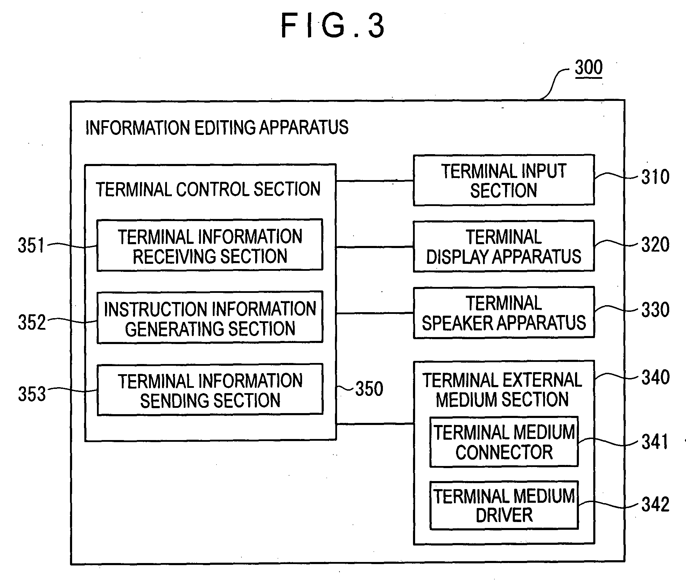

The configuration of one embodiment in a recording/playback system according to the present invention will be described with reference to attached drawings. In this embodiment, the configuration for editing and processing information recorded in a DVD-R (Digital Versatile Disc-Recordable) or the like as a recording medium will be described. However, the recording medium applicable to the present invention is not limited to the above, but any recording medium is applicable thereto. Fig. 1 is a block diagram schematically showing the configuration of a recording/playback system. Fig. 2 is a block diagram schematically showing the configuration of an information processing apparatus. Fig. 3 is a block diagram schematically showing the configuration of an information editing apparatus.

### (Schematic Configuration of Recording/playback System)

Referring to Fig. 1, reference numeral 100 denotes a recording/playback system (playback system).

The recording/playback system 100 records, edits and reproduces, for example, content information including information as video data, image data and audio data contained in TV broadcasts or recorded in various recorders. The recording/playback system 100 is provided with a playback apparatus 200 and an information editing apparatus 300. The playback apparatus 200 is also provided with a display apparatus 210, a speaker apparatus 220 and an information processing apparatus 400.

The display apparatus 210 of the playback apparatus 200 is connected to the information processing apparatus 400. The display apparatus 210 receives and appropriately processes content information such as video data and image data, which are the information to be output from the information processing apparatus 400, and then outputs them, i.e., displays them on a screen. Also, the display apparatus 210 is capable of displaying TV image data received by a not-shown TV receiver on the screen. The display apparatus 210 may be, for example, a liquid crystal display panel, an organic EL (Electro Luminescence) panel, a PDP (Plasma Display Panel), a CRT (Cathode-Ray Tube), an FED (Field Emission Display) or an electrophoretic display panel. As for the configuration that the display apparatus 210 receives the content information from the information processing apparatus 400, any method is applicable, such as that for receiving via a cable or through a radio medium.

The speaker apparatus 220 of the playback apparatus 200 is provided with, for example, an audio output and an amplifier such as a speaker (not shown). The speaker apparatus 220 is connected to the information processing apparatus 400. The speaker apparatus 220 appropriately amplifies content information such as music data and audio data, which are the information to be output from the information processing apparatus 400, using the amplifier to output them as sounds, i.e., to produce sounds from the audio output. The speaker apparatus 220 is capable of outputting TV audio data received by, for example, a TV receiver as sounds. As for the configuration that the speaker apparatus 220 receives the content information from the information processing apparatus 400, any method is applicable, such as that for receiving via a cable or through a radio medium.

The information processing apparatus 400 of the playback apparatus 200 carries out processing for recording, editing and reproducing various types of information including, for example, content information such as video data, image data and audio data contained in TV broadcasts or recorded in various types of external recorders (not shown), and script information (command information) as management information (VMGI: Video Manager Information), which is the information for reproducing the content information. As shown in Fig. 2, the information processing apparatus 400 is provided with an input section 410, a drive mechanism section 420, a HD (Hard Disk) section 430, an external medium section 440 as a medium recording section, an information processing section 450 as various types of programs used on an OS (Operating System) controlling the entire operation of the information processing apparatus 400, and a control section 460.

The input section 410 has various operation buttons and operation knobs (not shown) used for input operation. The input operation using the operation buttons and operation knobs includes the setting of, for example, setting items relevant to the operations of the information processing apparatus 400. When the setting items are input, the input section 410 outputs predetermined signals to the control section 460 to set the setting items. As for the configuration of the input section 410, without limiting to those with the operation buttons or operation knobs for input operation, any of the following configurations that can set and input various setting items may be employed. For example, input operation using a keyboard, a mouse, a touch panel provided on a display apparatus 210 or on a not-shown display apparatus of the information processing apparatus 400, and input operation using sounds are applicable.

Under the control of the control section 460, the drive mechanism section 420 records various types of information such as content information and script information in a removably loaded recording medium, and reads out the recorded information. Herein, the recording medium may be, without limitation, a DVD-R (Digital Versatile Disc-Recordable), a DVD-RW (Digital Versatile Disc-Rewritable) or a DVD-RAM (Digital Versatile Disc-Random Access Memory). The drive mechanism section 420 is provided with, for example, a pickup (not shown), a rotary drive section and a feed motor (not shown). The pickup reads out data recorded on an information recording surface of the recording medium and records data thereon using the light or the like. In place of the light, magnetism or the like may be employed. The rotary drive section is provided with, for example, a turntable for supporting the recording medium and a spindle motor for driving the recording medium to rotate at a constant linear or constant angular velocity. The feed motor drives the pickup to move parallel to the information recording surface in the radius direction.

Under the control of the control section 460, the HD section 430 records various types of information readably. The HD section 430 is provided with a HD 431 and a HDD (Hard Disk Drive) 432. The HD 431 records various types of information readably. Under the control of the control section 460, the HDD 432 records information output from the control section 460 into the HD 431, and reads out information from the HD 431 to output it to the control section 460.

Under the control of the control section 460, the external medium section 440 records various types of information readably in a not-shown external medium (external recording medium), which is, for example, a silicon device such as memory card detachably mounted thereon. The external medium section 440 is provided with a medium connector 441 and a medium driver 442. The external medium is detachably connected to the medium connector 441. The medium driver 442 records information output from the control section 460 in the external medium connected to the medium connector 441, and reads out the information recorded in the external medium to output it to the control section 460. The external medium section 440 is so configured to record at least content information and reads out at least script information.

Under the control of the control section 460, the information processing section 450 receives content information from, for example, an input terminal 470 provided to the information processing apparatus 400 and facing to the outside, and processes the information. Further, the information processing section 450 processes the information so as to be output by the display apparatus 210 or the speaker apparatus 220 via, for example, an output terminal 480 provided to the information processing apparatus 400 and facing to the outside. As for the input and output of the information in the information processing section 450, the following arrangement may be applicable. That is, in place of the input terminal 470 and output terminal 480, for example, the information may be input and processed or output to the display apparatus 210 or the speaker apparatus 220 via a radio medium using a communication tool.

Based on the setting items set through the input operation using the input section 410, the control section 460 receives various types of information timely from the input terminal 470 provided to the information processing apparatus 400 and facing the outside, the drive mechanism section 420, the HD section 430, or the external medium section 440. The control section 460 records the information appropriately in a recording medium, the HD 431, an external medium or the like. Also, the control section 460 appropriately processes the information received by controlling the information processing section 450, and outputs, i.e., reproduces the information by the display apparatus 210 and/or the speaker apparatus 220. The control section 460 is provided with, for example, an information receiving section 461, an instruction information receiving section 462, a recording section 463 and the like as various types of programs used on the OS (Operating System) controlling the entire operation of the information processing apparatus 400.

Based on the setting items input through the input section 410, the information receiving section 461 receives, for example, content information recorded in a recording medium from the drive mechanism section 420. The information receiving section 461 outputs the received information appropriately to the external medium section 440. In addition to the content information, the information receiving section 461 is capable of acquiring various types of information. Further, the information receiving section 461 may be configured to acquire various types of information not only from the drive mechanism section 420 but also, for example, directly from the input terminal 470, or from the HD section 430 or the external medium section 440. The received information is appropriately output to the drive mechanism section 420, the HD section 430 or the external medium section 440, or output thereto after being processed. In place of such constitution that the information is received from the outside thorough the input terminal 470, the information receiving section 461 may be so arranged that, for example, the information is received via a radio medium using a communication tool.

Based on the setting items set through the input operation using the input section 410, the instruction information receiving section 462 controls the external medium section 440 to receive the recorded script information from an external medium connected to the medium connector 441 using the medium driver 442. The received script information is output timely to the recording section 463.

Based on the setting items set through the input operation using the input section 410, the recording section 463 receives the script information output from the instruction information receiving section 462, and appropriately outputs to the drive mechanism section 420 or the HD section 430 to record the information. That is, the recording section 463 controls the drive mechanism section 420 or the HD section 430 to store the script information in a predetermined recording medium mounted on the drive mechanism section 420 or the HD 431 of the HD section 430.

The information editing apparatus 300 edits the content information recorded in a recording medium or the HD 431 by the information processing apparatus 400. That is, the information editing apparatus 300 sets a condition for the content information to be reproduced by the display apparatus 210 or speaker apparatus 220, and processes the content information recorded in the recording medium so as to be reproduced in the set condition. The information editing apparatus 300 may be, for example, a cellular phone, a PHS (Personal Handyphone System), a PDA (Personal Digital Assistant), a portable type personal computer such as a so-called notebook computer and a remote controller. The information editing apparatus 300 is provided with a terminal input section 310, a terminal display apparatus 320, a terminal speaker apparatus 330, a terminal external medium section 340 and a terminal control section 350.

Like the input section 410 in the information processing apparatus 400, the terminal input section 310 has various operation buttons and knobs (not shown) used for input operation. The input operation using the operation buttons and knobs includes, in addition to the setting of the setting items in the information editing apparatus 300, the condition for reproducing the content information recorded in the recording medium by the information editing apparatus 300, i.e., script information having output area information for specifying data area to be reproduced. With input operation, the terminal input section 310 appropriately outputs predetermined signals to the terminal control section 350 to set the setting items, the script information and the like. In the terminal input section 310 also, like the input section 410, various configuration such as input via a touch panel, voice or the like are applicable.

Under the control of the terminal control section 350, the terminal display apparatus 320 receives content information such as video data and image data output from the terminal control section 350, and appropriately processes the information to output, i.e., display it on the screen. Like the display apparatus 210, various types of display apparatuses are applicable to the terminal display apparatus 320.

Like the speaker apparatus 220, the terminal speaker apparatus 330 is provided with an audio output and an amplifier. Under the control of the terminal control section 350, the terminal speaker apparatus 330 appropriately amplifies the content information such as audio data and music data output from the terminal control section 350 to output them as sounds.

Like the external medium section 440 in the information processing apparatus 400, under the control of the terminal control section 350, the terminal external medium section 340 records various types of information such as content information and script information readably in a not-shown external medium (external recording medium) detachably mounted thereon. The terminal external medium section 340 records various types of information output from a terminal medium connector 341, to which the external medium is detachably connected, and the terminal control section 350 in the external medium connected to the terminal medium connector 341, and reads out the information recorded in the external medium to output it to the terminal control section 350.

Based on the setting items input through the terminal input section 310, the terminal control section 350 processes various types of information such as content information and script information so that the content information, which is recorded in the recording medium to be reproduced by the display apparatus 210 or the speaker apparatus 220 in the information processing apparatus 400 is reproduced in a predetermined condition. The terminal control section 350 is provided with, for example, a terminal information receiving section 351, an instruction information generating section 352 and a terminal information sending section 353 as various types of programs used on the OS (Operating System) controlling the entire operation of the information editing apparatus 300.

Based on the setting items input through the terminal input section 310, the terminal information receiving section 351 controls the terminal external medium section 340 to receive the content information to be reproduced by the information processing apparatus 400 by the display apparatus 210 and/or the speaker apparatus 220 from the external medium connected to the terminal medium connector 341. The terminal information receiving section 351 is capable of acquiring other various types of information without limiting to the content information. Other than the arrangement to acquire the content information recorded in the external medium, the terminal information receiving section 351 may have such configuration that, for example, the content information is acquired directly from the information processing apparatus 400 via a network or radio medium using a communication tool.

Based on the signals output from the terminal input section 310 through the predetermined input operation, the instruction information generating section 352 generates edited script information, which is a piece of script information including the above-described output area information for reproducing predetermined data area of the content information by editing. The edited script information is generated by the following input operation. For example, the terminal control section 350 controls the terminal display apparatus 320 to display a screen for editing the content information, and the user specifies the data area of the content information to be reproduced using the terminal input section 310 with reference to the screen. The instruction information generating section 352 outputs the generated edited script information to the terminal information sending section 353.

The terminal information sending section 353 receives the edited script information output from the instruction information generating section 352, and controls the terminal external medium section 340 to record the information in the external medium connected to the terminal medium connector 341. Other than the arrangement in which the edited script information is recorded in the external medium, for example, it will be appropriate to have such arrangement that the edited script information is directly output and sent to the information processing apparatus 400 via radio medium using a communication tool.

### (Configuration of Information Processing Unit)

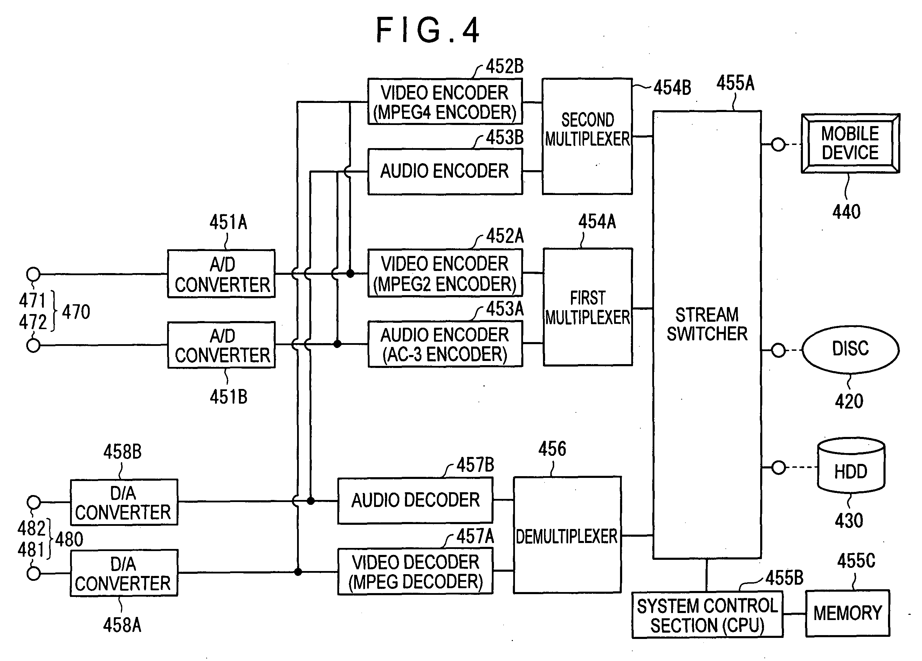

Next, referring to Fig. 4, specific configuration of the information processing apparatus 400 will be described in detail. Fig. 4 is a block diagram showing a detailed configuration of the information processing apparatus.

As described above, the information processing apparatus 400 is provided with the input terminal 470 for receiving the content information and the like from the outside, and the output terminal 480. As shown in Fig. 4, the input terminal 470 is provided with a video input terminal 471 to which content information such as video data and image data are input, and an audio input terminal 472 to which content information such as audio data and music data are input. A TV receiver, a video recorder (not shown) or the like can be connected to these video input terminal 471 and the audio input terminal 472 so that content information such as TV image data and TV audio data are input therein. Likewise, the output terminal 480 is provided with a video output terminal 481 for outputting content information such as video data and image data, and an audio output terminal 482 for outputting content information such as audio data and music data. The display apparatus 210 is connected to the video output terminal 481 so that the display apparatus 210 appropriately processes the output content information to display it on the screen. The speaker apparatus 220 is connected to the audio output terminal 482 so that the speaker apparatus 220 appropriately processes the content information to out put it as sounds.

The information processing section 450 is connected to the input terminal 470 and the output terminal 480. As described above, the information processing section 450 appropriately encodes and multiplexes the content information input from the input terminal 470, and outputs the information to the drive mechanism section 420, the HD section 430 or the external medium section 440 to record it therein. Also, the information processing section 450 appropriately decodes the information received from the drive mechanism section 420, the HD section 430 or the external medium section 440 to output it via the output terminal.

To be more specific, a video A/D (Analog/Digital) converter 451A is connected to the video input terminal 471 whereas an audio A/D converter 451B is connected to the audio input terminal 472. The video A/D converter 451A converts the content information input from the video input terminal 471 from analog signals to digital signals to output them. The audio A/D converter 451B converts the content information input from the audio input terminal 472 from analog signals to digital signals to output them.

A first video encoder 452A and a second video encoder 452B are connected to the video A/D converter 451A. The first video encoder 452A encodes the content information such as video data and image data converted into digital signals based on, for example, MPEG-1 (Moving Picture Expert Group-1) or MPEG-2, which is a standard for compression and decompression of digital moving picture and sound established by International Telecommunication Union (ITU-TS) and International Organization for Standardization (ISO). The second video encoder 452B encodes the content information based on MPEG-4 in place of the MPEG-1/2 in the first video encoder 452A. As for the configuration for encoding in the information processing section 450, without limiting to these MPEGs, any format such as DivX (supported by DivXNetworks), which is one of the CODECs (Compression/Decompression) as a program for compressing and decompressing video and audio data, is applicable.

On the other hand, a first audio encoder 453A and a second audio encoder 453B are connected to the audio A/D converter 451B. The first audio encoder 453A encodes content information such as audio data and music data converted into digital signals based on, for example, AC-3 (Audio Code number 3), which is a digital surround system. The second audio encoder 453B encodes content information based on another standard.

A first multiplexer 454A is connected to the first video encoder 452A and the first audio encoder 453A whereas a second multiplexer 454B is connected to the second video encoder 452B and the second audio encoder 453B. The first multiplexer 454A multiplexes the encoded content information such as video data and image data output from the first video encoder 452A and the encoded content information such as audio data and music data output from the first audio encoder 453A, into a set of signals as a single channel to output it. Likewise, the second multiplexer 454B multiplexes the encoded video data and image data output from the second video encoder 452B and the encoded audio data and music data output from the second audio encoder 453B, into a set of signals as a single channel to output it.

A stream switcher 455A is connected to the first multiplexer 454A and the second multiplexer 454B. Further, a system control section 455B including a CPU (Central Processing Unit) and the like is connected to the stream switcher 455A. That is, the stream switcher 455A and the system control section 455B constitute the information receiving section 461, the instruction information receiving section 462 and the recording section 463. Based on the control signals from the system control section 455B, the stream switcher 455A outputs the multiplexed signals output from the first multiplexer 454A and the second multiplexer 454B to the drive mechanism section 420, the HD section 430 or the external medium section 440 to record the content information in the recording medium, the HD 431 or the external medium. The control signals from the system control section 455B are related to, for example, the setting items input through the input section 410, and based on the signals stored in a memory 455C connected to the system control section 455B. Also, based on the control signals from the system control section 455B, the stream switcher 455A receives various types of information from the drive mechanism section 420, the HD section 430 or the external medium section 440.

A demultiplexer 456 is connected to the stream switcher 455A. The demultiplexer 456 receives the content information output from the stream switcher 455A, and divides the multiplexed content information into content information such as video data and image data and the content information such as audio data and music data to output them.

A video decoder 457A and an audio decoder 457B are connected to the demultiplexer 456. The video decoder 457A decodes the content information such as video data and image data output from the demultiplexer 456 based on, for example, MPEG system to output it. The audio decoder 457B decodes the content information such as audio data and music data output from the demultiplexer 456 to output it.

A video D/A converter 458A is connected to the video decoder 457A whereas an audio D/A converter 458B is connected to the audio decoder 457B. The video D/A converter 458A converts the content information such as decoded video data and image data output from the video decoder 457A from digital signals into analog signals. The content information converted into analog signals is output via the video output terminal 481 connected with the video D/A converter 458A. Likewise, the audio D/A converter 458B converts the decoded content information such as audio data and music data output from the audio decoder 457B from digital signals into analog signals. The content information converted into analog signals is output from the audio output terminal 482 connected with the audio D/A converter 458B.

The video decoder 457A is connected to the second video encoder 452B so as to encode the decoded content information such as video data and image data by the second video encoder 452B again. Likewise, the audio decoder 457B is connected to the second audio encoder 453B so as to encode the decoded content information such as audio data and music data by the second audio encoder 453B again.

### [Operation of Recording/playback System]

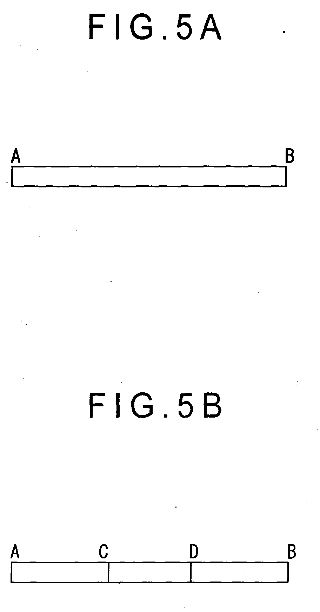

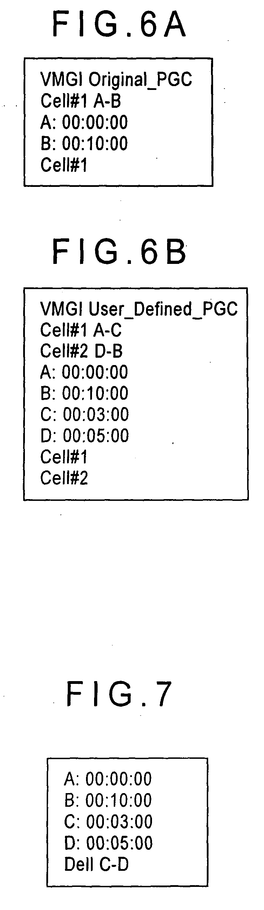

Next, the operation in the above-described recording/playback system 100 will be described with reference to attached drawings. In this embodiment, an operation, in which content information is edited into such condition that the content information is reproduced with a part the area being deleted will be described. However, any editing operation is possible; i.e., editing into a condition that the content information is deleted in a plurality of areas, or into a condition that part of areas of the content information is reproduced at a double speed, or the like. Fig. 5A and Fig. 5B are schematic diagrams each conceptually showing content information in time-line. Fig. 5A is a diagram schematically showing content information recorded in a recording medium before editing, while Fig. 5B is a diagram schematically showing the content information after editing. Fig. 6A and Fig. 6B are schematic diagrams each conceptually showing script information. Fig. 6A is a diagram conceptually showing script information recorded in a recording medium, while Fig. 6B is a diagram conceptually showing the script information after editing. Fig. 7 is a diagram conceptually showing script information generated by the information editing apparatus.

### (Recording of Content Information)

First, the recording operation for recording the content information will be described. In this embodiment, an operation for recording a TV broadcast will be described as an example of recording information. However, the recording operation is not limited to the above. For example, the recording operation is applicable to the recording of various types of information such as radio broadcast, satellite broadcast, and further video data, image data and audio data or music data recorded in an external apparatus.

For recording the content information, a user appropriately supplies power to the information processing apparatus 400 to start it up. The user then inputs an instruction to record, for example, a TV broadcast using the input section 410. Based on the input operation, the control section 460 of the information processing apparatus 400 has the information processing section 450 to appropriately process the content information input from the input terminal 470. The recording section 463 then records the content information based on the information relevant to the recording destination, which is a setting item set by the input operation.

That is, the content information such as video data and image data input from the video input terminal 471 is converted into digital signals by the video A/D converter 451A while the content information such as audio data and music data input from the audio input terminal 472 is converted into digital signals by the audio A/D converter 451B. The system control section 455B then encodes the content information converted into digital signals based on a signal of a recording destination input together with a signal of recording instruction via the input section 410. That is, if the recording destination is at least either one of the HD 431 and the recording medium, the first video encoder 452A encodes the content information such as video data and image data converted into digital signals based on, for example, MPEG-1/2 while the first audio encoder 453A encodes the content information such as audio data and music data converted into digital signals based on, for example, AC-3. Also, if the recording destination is the external medium, the second video encoder 452B encodes the content information such as video data and image data converted into digital signals based on, for example, MPEG-4 while the second audio encoder 453B encodes the content information such as audio data and music data converted into digital signals.

The content information such as video data and image data encoded by the first video encoder 452A and the content information such as audio data and music data encoded by the first audio encoder 453A are multiplexed into a set of signals of the content information as a single channel by the first multiplexer 454A. Also, the content information such as video data and image data encoded by the second video encoder 452B and the content information such as audio data and music data encoded by the second audio encoder 453B are multiplexed into a set of signals of the content information as a single channel by the second multiplexer 454B. After that, based on the signal of the recording destination input together with the signal of recording instruction via the input section 410, the system control section 455B controls the stream switcher 455A to output the content information multiplexed by the first multiplexer 454A and the script information for reproducing the content information to the drive mechanism section 420 or the HD section 430, or to output the content information multiplexed by the second multiplexer 454B and the script information of the content information to the external medium section 440. The output content information as shown in Fig. 5A and the script information as shown in Fig. 6A are recorded appropriately in the recording medium loaded in the drive mechanism section 420, the HD 431 of the HD section 430 or the external medium mounted on the external medium section 440.

### (Editing of Content Information)

Next, the editing operation for editing the content information will be described with reference to attached drawings. For editing the content information, the user inputs an instruction to edit predetermined content information using the input section 410. Based on the input operation, the control section 460 of the information processing apparatus 400 controls the external medium section 440 to determine whether or not the content information to be edited is recorded in the mounted external medium. When it is determined that the content information to be edited is recorded in the external medium, for example, the control section 460 has the not-shown display apparatus of the information processing apparatus 400 to display the fact to notify it to the user. Based on the notification, the user removes the external medium from the information processing apparatus 400 and mounts it on the information editing apparatus 300.

On the other hand, when the control section 460 determines that the content information to be edited is not recorded in the external medium, the user selects content information recorded in the HD 431 or the recording medium, and appropriately inputs an instruction to record the information in the external medium using the input section 410. Based on the input operation, the system control section 455B controls the drive mechanism section 420 or HD section 430 via the information receiving section 461 to receive the content information to be edited from the recording medium or the HD 431 and has the recording section 463 to record the information in the external medium.

Specifically, the system control section 455B controls the stream switcher 455A to receive content information from the recording medium or the HD 431. This content information divides the received content information, which is multiplexed by the demultiplexer 456, into content information such as video data and image data and content information such as audio data and music data. Further, the divided content information such as video data and image data is decoded based on, for example, MPEG system by the video decoder 457A while the content information such as audio data and music data is decoded by the audio decoder 457B. The system control section 455B then has the second video encoder 452B to encode the decoded content information such as video data and image data based on, for example, MPEG-4 while having the second audio encoder 453B to encode the decoded content information such as audio data and music data. After that, as described above, the content information such as video data and image data encoded by the second video encoder 452B and the content information such as audio data and music data encoded by the second audio encoder 453B are multiplexed into a set of signals of the content information as a single channel by the second multiplexer 454B. The system control section 455B then controls the stream switcher 455A to output the content information multiplexed by the second multiplexer 454B to the external medium section 440 to record the content information to be edited in the external medium. Then, as described above, the external medium in which the content information to be edited is recorded is removed from the information processing apparatus 400 by the user and mounted on the information editing apparatus 300.

On the other hand, in the information editing apparatus 300, based on the instruction to edit the content information input by the user using the terminal input section 310, the terminal information receiving section 351 of the terminal control section 350 controls the terminal external medium section 340 to receive the content information to be edited from the mounted external medium. Based on predetermined input operation using the terminal input section 310, the terminal control section 350 appropriately controls at least either one of the terminal display apparatus 320 and the terminal speaker apparatus 330 to output the received content information as images on the screen or sounds, i.e., reproduce the information. After recognizing the reproduced state, the user appropriately set the data area of the content information to be reproduced as shown in Fig. 5B through the input operation using the terminal input section 310. For example, a start point (C in Fig. 5B) and an end point (D in Fig. 5B) in time-line in the data area to be deleted are input. Based on the input operation, the instruction information generating section 352 of the terminal control section 350 generates edited script information as shown in Fig. 7 corresponding to the data area of the content information to be reproduced. In Fig. 7, "DELL C-D" represents the output area information in the script information.

The terminal information sending section 353 of the terminal control section 350 appropriately controls the terminal external medium section 340 to record the edited script information generated by the instruction information generating section 352 in the external medium. When recognizing the recording by guidance displayed on, for example, the terminal display apparatus 320, the user removes the external medium and mount it on the information processing apparatus 400 and inputs an instruction to set the edited content through the input operation using the input section 410. Based on the input operation, the control section 460 of the information processing apparatus 400 has the instruction information receiving section 462 to control the external medium section 440 to receive the edited script information recorded in the external medium. The recording section 463 of the control section 460 appropriately controls the drive mechanism section 420 or HD section 430 to record the edited script information received by the instruction information receiving section 462 in, for example, the recording medium or HD 431 as shown in Fig. 6B. As for this recording, the information is recorded in, for example, in a VMGI in the recording medium. The information may be recorded in any manner; i.e., the edited script information may be newly recorded after deleting existing script information, or may be recorded independently from the script information. "Cell#1 A-C", "Cell#1 A-C", "Cell#1", "Cell#2" in Fig. 6B represent the output area information in the script information.

### (Reproduction of Content Information)

Next, the reproducing operation for reproducing the recorded content information will be described. For reproducing the content information, the user inputs an instruction to reproduce predetermined content information using the input section 410. Based on the input operation, the control section 460 of the information processing apparatus 400 appropriately controls the drive mechanism section 420, the HD section 430 or the external medium section 440 to search the recording medium, the HD 431 or the external medium for the content information to be reproduced as well as the script information for reproducing the content information as shown in Fig. 6A or the edited script information as shown in Fig. 6B. When the content information to be reproduced as well as the script information or the edited script information are received, the control section 460 has the information processing section 450 to carry out the processing for reproduction and reproduce the information based on the predetermined input operation using the input section 410.

Specifically, based on the information relevant to the information to be reproduced stored in the memory, the system control section 455B has the stream switcher 455A to search the drive mechanism section 420, the HD section 430 or the external medium section 440 for the content information to receive it, as well as search for the script information and the edited script information of the content information to receive them. In this search, when not only the script information but also the edited script information are recorded for the content information to be reproduced, the system control section 455B controls, for example, the not-shown display apparatus of the information processing apparatus 400 to display a request of setting whether to reproduce based on the script information or the edited script information. Either the script information or the edited script information selected by the user through the input operation using the input section 410 is stored in the memory 455C.

Based on the script information or the edited script information stored in the memory, the received content information is reproduced. That is, the demultiplexer 456 divides the received multiplexed content information into content information such as video data and image data and content information such as audio data and music data. The divided content information such as video data and image data is decoded based on, for example, MPEG system by the video decoder 457A while the content information such as audio data and music data is decoded by the audio decoder 457B. After that, the decoded content information such as video data and image data is converted from digital signals into the analog signals by the video D/A converter 458A while the decoded content information such as audio data and music data is converted from digital signals into the analog signals by the audio D/A converter 458B. The content information such as video data and image data converted into analog signals is output from the video output terminal 481 while the content information such as audio data and music data converted into analog signals is output from the audio output terminal 482. With the output of the content information, the display apparatus 210 connected to the video output terminal 481 displays the content information such as video data and image data on the screen in accordance with the script information or the edited script information while the speaker apparatus 220 connected to the audio output terminal 482 outputs the content information such as audio data and music data as sounds in accordance with the script information or the edited script information. The recorded content information is thus reproduced as originally recorded or as edited.

### [Advantages of Recording/playback System]

As described above, in this embodiment, the content information to be reproduced by the display apparatus 210 and the speaker apparatus 220 is received by the information receiving section 461, and recorded in an external medium by the recording section 463. When the user edits the information using the information editing apparatus 300, the external medium with the content information recorded therein is mounted on the information editing apparatus 300 so that the terminal information receiving section 351 of the information editing apparatus 300 receives the content information from the information processing apparatus 400. After setting the data area, which is the condition for reproducing the content information, through the input operation using the terminal input section 310, the edited script information is generated by the instruction information generating section 352 and recorded in the external medium. The external medium is mounted on the information processing apparatus 400 again so that the edited script information is received by the instruction information receiving section 462. The content information is processed by the information processing section 450 so as to be reproduced based on the received edited script information. Owing to this, for example, a user can edit information using the information editing apparatus 300 carried by the user in spare time, and the content can be transferred to the information processing apparatus 400. Accordingly, different from conventional manner, it is not necessary to edit the content information in the information processing apparatus 400 while reproducing the content information using the display apparatus 210 and the speaker apparatus 220. Therefore, the content information can be efficiently and easily edited.

Also, an external medium is used to send the content information from the information processing apparatus 400 for editing it, and to send the edited script information from the information editing apparatus 300 to the information processing apparatus 400. Owing to this, the content information and the edited script information can be transferred with simple configuration. Therefore, cellular phones and the like using existing external media can be effectively employed. Thus effective editing can be easily obtained without spending communication cost.

The content information recorded in a recording medium is read out and sent to the information editing apparatus 300 to be received and edited therein. The edited script information is recorded in the recording medium again. Owing to this, even when another information processing apparatus 400 reproduces the information in the recording medium, the information can be reproduced as it is edited. Further, it is not necessary to have a memory or the HD 431 for storing the edited script information separately, and hence the configuration can be easily simplified.

The edited script information having the output area information for setting the area of the content information of stream data such as video data and audio data to be reproduced is generated and used for the editing. Accordingly, the information can be edited with simple data processing, and thus simplification of the configuration and improvement of the processing efficiency can be easily achieved.

The information editing apparatus 300 is a portable apparatus. Accordingly, user can edit information at any time, and thus convenient and easy editing can be achieved. Further, in addition to the terminal display apparatus 320 for displaying the content information and the terminal speaker apparatus 330 for outputting sounds, the information editing apparatus 300 is provided with the terminal input section 310 for setting and generating the edited script information. Owing to this, the content information can be edited while appropriately reproduced. Particularly, cellular phones having a display apparatus and an input apparatus can be used, and therefor easily expanding the applicability of the present invention.

A system configuration having the information processing apparatus 400 and the information editing apparatus 300 is employed. Accordingly, as described above, the information is edited by the information editing apparatus 300, and the edited information is appropriately transferred to the information processing apparatus 400. This configuration can easily realize the effective editing that allows each user to edit the information at any time the user desires. Therefore, the configuration for editing can be easily built and the use thereof can be easily expanded.

Since the recording/playback system is provided with the display apparatus 210 and the speaker apparatus 220, not only the editing of the content information but also the edited information can be reproduced. For example, the information processing apparatus 400 may be integrally constructed with the display apparatus 210 and the speaker apparatus 220. Accordingly, by arranging the information processing apparatus 400 to be portable, the content information can be reproduced after editing the information at users' convenience.

### [Modification of Embodiment]

The present invention is not limited to the above-described embodiment, but includes the following modifications within a range that the object of the present invention can be achieved.

As the information to be edited and processed, for example, content information including video data and audio data has been described. However, without limiting thereto, information including video data or image data only, or, audio data or music data only is applicable. Further, any information including another program information, text data or control signals is applicable. As for the recording medium, any medium capable of recording information is applicable, which may be optical disc such as DVD-ROM (Digital Versatile Disc-Read Only Memory), CD-DA (Compact Disk-Digital Audio), CD-ROM (Compact Disk-Read Only Memory), DVD-Audio, DVD-RAM (Digital Versatile Disc-Random Access Memory), DVD-R (Digital Versatile Disc-Recordable), DVD-RW (Digital Versatile Disc-ReWritable), magneto-optical (MO) disc, magnetic disk such as hard disk or flexible disk, magnetic tape, memory card, and IC (Integrated Circuit) card etc.

The above-described information processing apparatus 400 has the information processing section 450 for processing the content information so as to be reproduced. However, another device may be used for reproduction operation, and the content information may be processed so as to be only edited by the information editing apparatus 300. That is, for example, the information to be edited is received and transmitted to the information editing apparatus 300; the edited script information after the editing is received; and based on the edited script information, the information is appropriately output. Further, the configuration capable of recording has been described. However, another configuration may be provided to carry out the recording separately.

In the above description, the external medium is used for transmitting the content information from the information processing apparatus 400 to the information editing apparatus 300 for the editing, as well as transmitting the edited script information after the editing from the information editing apparatus 300 to the information processing apparatus 400. However, for example, the information may be transmitted and received via a radio medium using a communication tool as previously mentioned. With this configuration, a configuration for using the external medium or mounting and dismounting operation of the external medium is not required. Accordingly, simplification of the configuration can be achieved and the editing can be carried out easily and effectively. The configuration of the information processing apparatus 400 equipped with both of the drive mechanism section 420 and the HD section 430 is described. However, it may be employed such configuration that only either one them is provided; such configuration that a plurality of the drive mechanism sections 420 and the HD sections 430 are provided; or such configuration that a plurality of the external medium sections 440 are provided for transferring the management information of the external medium to an external medium which can be mounted on the information editing apparatus 300 to be edited therein.

Further, as the content information to be edited, the content information recorded in a recording medium is edited in the above description. However, the content information recorded in another recording medium such as the HD 431 also may be received by editing apparatus 300 via an external medium or communication, and may be edited therein. And as for the editing operation, such function for editing in the information processing apparatus 400 may be added.

Although the information editing apparatus 300 is the portable type in the above embodiment, it is not limited to the portable type. For example, it may be arranged so that a plurality of information editing apparatuses 300 are connected to the information processing apparatus 400 in a network configuration so as to transmit and receive the information therebetween, and the information is appropriately edited in each of the information editing apparatuses 300; and the edited content is controlled integrally by the information processing apparatus 400 to output the information therefrom. With such configuration, compared to the case where the information is edited in the information processing apparatus 400, the information can be edited effectively and easily. As for the network through which the information is transferred between the information processing apparatus 400 and the information editing apparatus 300, for example, the following medium is available; i.e., Internet based on a general protocol such as TCP/IP, intranet, LAN (Local Area Network), a network such as communication line network or broadcast network in which a plurality of base stations capable of transmitting and receiving the information via a radio medium form a network, and further, a radio medium itself that serves as the medium for directly transmitting and receiving the information. However, the network is not limited to the above, but any configuration capable of transmitting and receiving the information may be employed. Further, as for the radio medium, any medium such as electric waves, light, acoustic waves, electromagnetic waves are applicable.

### [Advantages of Embodiment]

As described above, in this embodiment, the content information to be reproduced on the display apparatus 210 and/or the speaker apparatus 220 is received by the information receiving section 461 and recorded in an external medium by the recording section 463. When editing the information using the information editing apparatus 300, the user mounts the external medium recorded with content information on the information editing apparatus 300, and the content information is received from the information processing apparatus 400 by the information editing apparatus 300 via terminal information receiving section 351. After setting data area, which is the condition when the content information is reproduced, through the input operation using the information editing apparatus 300, the edited script information is generated so as to be recorded in the external medium. And then, the external medium is mounted on the information processing apparatus 400 again. The edited script information is received by the instruction information receiving section 462, and the content information is recorded so as to be reproduced based on the received edited script information. With this arrangement, for example, using the mobile information editing apparatus 300, the editing processing can be carried out in a spare time and the content is transferred to the information processing apparatus 400. Different from conventional manner, it is not necessary to carry out the editing while reproducing the content information on the information processing apparatus 400 using the display apparatus 210 and/or speaker apparatus 220. Accordingly, the editing of the content information can be carried out effectively and easily.

Also, in this embodiment, the content information to be reproduced on the information processing apparatus 400 using the display apparatus 210 and/or speaker apparatus 220 is received by the terminal information receiving section 351, and reproduced on the terminal display apparatus 320 and the terminal speaker apparatus 330, and the edited script information having output area information related to the predetermined data area, which is the condition when the information is reproduced by the instruction information generating section 352 based on the input operation using the terminal input section 310, is generated. The information is recorded in the external medium by the terminal information sending section 353, and the edited script information is transmitted to the information processing apparatus 400 via the external medium. With this arrangement, for example, using the mobile information editing apparatus 300, the editing processing can be carried out in a spare time and the content is transferred to the information processing apparatus 400. Different from conventional manner, it is not necessary to carry out the editing processing while reproducing the content information on the information processing apparatus 400 using the display apparatus 210 and/or speaker apparatus 220. Accordingly, the editing processing of the content information can be carried out effectively and easily.

## Claims

1. An information processing apparatus, comprising:
an information receiving section for receiving information output from an output section;
an information sending section for sending the acquired information;
an instruction information receiving section for receiving instruction information, which is generated by a terminal apparatus based on the sent information and is related to an output condition for the output section to output the information, from the terminal apparatus; and
a recording section for recording the received instruction information in a recording medium so that the information can be output by the output section based on a content of the instruction information.

2. An information processing apparatus according to claim 1, wherein
an external recording medium mounted detachably on the terminal apparatus is arranged to be detachable,
the information sending section and the instruction information receiving section are capable of sending the information to the terminal apparatus or receiving the instruction information from the terminal apparatus via the external recording medium.

3. An information processing apparatus according to claim 1 or claim 2, wherein
the information is a series of stream data,
the instruction information has output area information related to an area of the information to be output by the output section.

4. An information processing apparatus according to any one of claims 1 to 3, wherein
the terminal apparatus is of a portable type capable of being carried, comprising a terminal output section for outputting information and a terminal input section for generating the instruction information by input operation.

5. An information editing apparatus for editing and processing information, which is recorded in a recording medium capable of recording various types of information and is output by an output section, comprising:
a terminal information receiving section for receiving the information from a processing apparatus for reading and processing the information so that the information can be output by the output section;
a terminal output section for outputting the received information;
an instruction information generating section for generating instruction information related to an output condition for the output section to output the information; and
a terminal information sending section for sending the generated instruction information to the processing apparatus.

6. An information processing system comprising:
the information processing apparatus set forth in any one of claims 1 to 4; and
the information editing apparatus set forth in claim 5.

7. A playback apparatus comprising:
the information processing apparatus set forth in any one of claims 1 to 4; and
an output section for outputting the information received by the information processing apparatus.

8. A playback system comprising:
the information processing system set forth in claim 6; and
the output section for outputting the information processed by the information processing system based on the instruction information.

9. An information processing method for editing and processing information, which is recorded in a recording medium capable of recording various types of information and is output by an output section, the information processing method comprising the steps of:
receiving the information so that the information is read by a terminal apparatus including a terminal output section capable of outputting the information;
receiving instruction information, which is generated for the information read by the terminal apparatus based on input operation and is related to a condition for the output section to output the information, from the terminal apparatus; and
recording the instruction information in the recording medium in a manner such that the output section outputs the information based on a content of the received instruction information.

10. An information editing method for editing and processing information, which is recorded in a recording medium capable of recording various types of information and is output by an output section, the information editing method comprising the steps of:
receiving the information from a processing apparatus for reading and processing the information so that the information can be output by the output section;
generating instruction information, which is related to information to be output by the output section based on input operation for the received information; and
receiving the instruction information by the processing apparatus in a condition where the output section outputs the information based on a content of the generated instruction information and outputting the instruction information so as to be recordable in the recording medium.

11. An information processing program for having a computing section to execute the information processing method set forth in claim 9.

12. An information processing program for having a computing section to execute the information editing method set forth in claim 10.

13. A recording medium storing the information processing program set forth in claim 11 or claim 12 in a manner readable by a computing section.
